# EUROPEAN PATENT APPLICATION

(11) **EP 4 280 646 A1**
(43) Date of publication of application: **22.11.2023**
(21) Application number: 21920817.0
(22) Date of filing: 16.12.2021
(51) Int. Cl.: H04W 12/06, H04W 48/08, B60R 25/20

(54) **IN-VEHICLE INFOTAINMENT PRODUCT CONNECTION METHOD AND APPARATUS**

(30) Priority: 21.01.2021 CN 202110083855
(71) Applicant: Huawei Technologies Co., Ltd., Shenzhen, Guangdong 518129 (CN)
(72) Inventor: LI, Zhuofei, Shenzhen, Guangdong 518129 (CN); DIAO, Meng, Shenzhen, Guangdong 518129 (CN); WANG, Zi, Shenzhen, Guangdong 518129 (CN)
(74) Representative: MERH-IP Matias Erny Reichl Hoffmann Patentanwälte PartG mbB
(86) International application number: PCT/CN2021/138739
(87) International publication number: WO 2022/156443

(57) **Abstract**

This application relates to a head unit connection method and apparatus. The method is applied to a vehicle lock module in a vehicle, the vehicle lock module stores head unit connection information, and the head unit connection information includes authentication information. The method includes: verifying an identity of a vehicle key module in a terminal device; when verification on the identity of the vehicle key module succeeds, generating a first message including the head unit connection information; and sending the first message to the vehicle key module, so that a terminal connection module in the terminal device establishes, based on the head unit connection information, a head unit channel connection through which the terminal connection module communicates with a head unit connection module in the vehicle. According to the head unit connection method and apparatus provided in this application, convenience of connecting the terminal device to a head unit can be improved.

## Description

This application claims priority to Chinese Patent Application No. 202110083855.5, filed with the China National Intellectual Property Administration on January 21, 2021 and entitled "HEAD UNIT CONNECTION METHOD AND APPARATUS", which is incorporated herein by reference in its entirety.

### TECHNICAL FIELD

This application relates to the communication field, and in particular, to a head unit connection method and apparatus.

### BACKGROUND

A head unit is short for an in-vehicle infotainment product installed in a vehicle. Head unit and mobile phone interconnection is to establish a connection between a head unit and a mobile phone, and transmit data such as an image, audio, and a video between the mobile phone and the head unit. In this way, powerful functions of the mobile phone are used to create better smart travel experience for users.

Currently, when a mobile phone is connected to a head unit for the first time, or when the mobile phone is connected to the head unit again after an existing connection is aged and cleared, a user needs to manually enter authentication information such as a personal identification number (Personal Identification Number, PIN), which is inconvenient and affects user experience.

### SUMMARY

In view of this, a head unit connection method and apparatus are provided, which can improve convenience of connecting a terminal device to a head unit.

According to a first aspect, an embodiment of this application provides a head unit connection method. The method is applied to a vehicle lock module in a vehicle, the vehicle lock module is configured to control a vehicle lock to be unlocked or locked, the vehicle lock module stores head unit connection information, and the head unit connection information includes authentication information. The method includes: verifying an identity of a vehicle key module in a terminal device, where the vehicle key module is configured to trigger the vehicle lock module to control the vehicle lock; when verification on the identity of the vehicle key module succeeds, generating a first message including the head unit connection information; and sending the first message to the vehicle key module, so that a terminal connection module in the terminal device establishes, based on the head unit connection information, a head unit channel connection through which the terminal connection module communicates with a head unit connection module in the vehicle, where the terminal connection module is configured to transmit data to the head unit connection module, and the head unit connection module is configured to transmit data to a head unit in the vehicle.

In this embodiment of this application, the authentication information is transferred to the terminal connection module in the terminal device by using the first message, so that the terminal connection module can be connected to the head unit connection module without a need for a user to manually enter the authentication information. This improves convenience.

According to the first aspect, in a first possible implementation of the head unit connection method, the method further includes: when a connection signal sent by the vehicle key module is detected, verifying the identity of the vehicle key module by using challenge data; and when verification on the identity of the vehicle key module succeeds, establishing a vehicle key channel connection through which the vehicle lock module communicates with the vehicle key module; and the sending the first message to the vehicle key module includes: sending the first message to the vehicle key module through the vehicle key channel connection.

In this way, the first message is sent through the vehicle key channel connection, so that security in a head unit connection message transmission process can be improved, and a head unit connection message leakage possibility can be reduced.

According to the first aspect, in a second possible implementation of the head unit connection method, the method further includes: receiving head unit connection information sent by the head unit connection module, where the head unit connection information is generated when the head unit connection module successfully establishes the head unit channel connection; and updating the stored head unit connection information by using the received head unit connection information.

In this way, after the head unit connection module successfully establishes a head unit channel connection to the terminal connection module each time, a piece of new head unit connection information is generated, so that used head unit connection information is invalid. This reduces a loss caused by leakage of the head unit connection information in a transmission process, and improves security.

According to the first possible implementation or the second possible implementation of the first aspect, in a third possible implementation of the head unit connection method, the method further includes: storing the head unit connection information in a secure element SE, or storing the head unit connection information in a trusted execution environment TEE, or storing the head unit connection information after software-based encryption.

In this way, the stored head unit connection information is not easy to be leaked and tampered with, and the security is improved.

According to a second aspect, an embodiment of this application provides a head unit connection method. The method is applied to a vehicle key module in a terminal device, the vehicle key module is configured to trigger a vehicle lock module in a vehicle to control a vehicle lock, and the vehicle lock module is configured to control the vehicle lock to be unlocked or locked. The method includes: receiving a first message sent by the vehicle lock module in the vehicle; when it is determined that a vehicle key channel connection is successfully established, obtaining head unit connection information from the first message, where the head unit connection information includes authentication information, and the vehicle key channel connection is used for communication between the vehicle key module and the vehicle lock module; and sending the head unit connection information to a terminal connection module in the terminal device, so that the terminal connection module establishes, based on the head unit connection information, a head unit channel connection through which the terminal connection module communicates with a head unit connection module in the vehicle, where the terminal connection module is configured to transmit data to the head unit connection module, and the head unit connection module is configured to transmit data to a head unit in the vehicle.

In this embodiment of this application, the authentication information is transferred to the terminal connection module in the terminal device by using the first message, so that the terminal connection module can be connected to the head unit connection module without a need for a user to manually enter the authentication information. This improves convenience.

According to a third aspect, an embodiment of this application provides a head unit connection method. A terminal connection module is configured to transmit data to a head unit connection module in a vehicle, the head unit connection module is configured to transmit data to a head unit in the vehicle, the terminal connection module stores head unit connection information, the head unit connection information includes authentication information, the head unit connection information is from a vehicle key module in a terminal device, the vehicle key module is configured to trigger a vehicle lock module in the vehicle to control a vehicle lock, and the vehicle lock module is configured to control the vehicle lock to be unlocked or locked. The method includes: receiving a head unit connection request initiated by the head unit connection module in the vehicle, or initiating a head unit connection request when a start signal of the head unit is detected; searching the stored head unit connection information for head unit connection information matching the head unit connection request; obtaining authentication information from the found head unit connection information; and returning the authentication information to the head unit connection module, to establish a head unit channel connection through which the terminal connection module communicates with the head unit connection module.

In this embodiment of this application, the authentication information is transferred to the terminal connection module in the terminal device by using a first message, so that the terminal connection module can be connected to the head unit connection module without a need for a user to manually enter the authentication information. This improves convenience.

According to the third aspect, in a first possible implementation of the head unit connection method, the method further includes: receiving the head unit connection information sent by the vehicle key module; and storing the received head unit connection information in a secure element SE, or storing the received head unit connection information in a trusted execution environment TEE, or storing the received head unit connection information after software-based encryption.

In this way, the stored head unit connection information is not easy to be leaked and tampered with, and the security is improved.

According to a fourth aspect, an embodiment of this application provides a head unit connection apparatus. The apparatus is applied to a vehicle lock module in a vehicle, and the vehicle lock module is configured to control a vehicle lock to be unlocked or locked. The apparatus includes: a storage module, configured to store head unit connection information; a verification module, configured to verify an identity of a vehicle key module in a terminal device, where the vehicle key module is configured to trigger the vehicle lock module to control the vehicle lock; a generation module, configured to: when verification performed by the verification module on the identity of the vehicle key module succeeds, generate a first message including the head unit connection information stored by the storage module; and a sending module, configured to send, to the vehicle key module, the first message generated by the generation module, so that a terminal connection module in the terminal device establishes, based on the head unit connection information, a head unit channel connection through which the terminal connection module communicates with a head unit connection module in the vehicle, where the terminal connection module is configured to transmit data to the head unit connection module, and the head unit connection module is configured to transmit data to a head unit in the vehicle.

According to the fourth aspect, in a first possible implementation of the head unit connection apparatus, the apparatus further includes: a verification module, configured to: when a connection signal sent by the vehicle key module is detected, verify the identity of the vehicle key module by using challenge data; and an establishment module, configured to: when verification on the identity of the vehicle key module succeeds, establish a vehicle key channel connection through which the vehicle lock module communicates with the vehicle key module; and the sending module is further configured to send the first message to the vehicle key module through the vehicle key channel connection.

According to the fourth aspect, in a second possible implementation of the head unit connection apparatus, the apparatus further includes: a receiving module, configured to receive head unit connection information sent by the head unit connection module, where the head unit connection information is generated when the head unit connection module successfully establishes the head unit channel connection; and an update module, configured to update the stored head unit connection information by using the received head unit connection information.

According to the first possible implementation or the second possible implementation of the fourth aspect, in a third possible implementation of the head unit connection apparatus, the storage module is further configured to: store the head unit connection information in a secure element SE, or store the head unit connection information in a trusted execution environment TEE, or store the head unit connection information after software-based encryption.

According to a fifth aspect, an embodiment of this application provides a head unit connection apparatus. The apparatus is applied to a vehicle key module in a terminal device, the vehicle key module is configured to trigger a vehicle lock module in a vehicle to control a vehicle lock, and the vehicle lock module is configured to control the vehicle lock to be unlocked or locked. The apparatus includes: a receiving module, configured to receive a first message sent by the vehicle lock module in the vehicle; an obtaining module, configured to: when it is determined that a vehicle key channel connection is successfully established, obtain head unit connection information from the first message received by the receiving module, where the head unit connection information includes authentication information, and the vehicle key channel connection is used for communication between the vehicle key module and the vehicle lock module; and a sending module, configured to send the head unit connection information obtained by the obtaining module to a terminal connection module in the terminal device, so that the terminal connection module establishes, based on the head unit connection information, a head unit channel connection through which the terminal connection module communicates with a head unit connection module in the vehicle, where the terminal connection module is configured to transmit data to the head unit connection module, and the head unit connection module is configured to transmit data to a head unit in the vehicle.

According to a sixth aspect, an embodiment of this application provides a head unit connection apparatus. The apparatus is applied to a terminal connection module in a terminal device, the terminal connection module is configured to transmit data to a head unit connection module in a vehicle, the head unit connection module is configured to transmit data to a head unit in the vehicle, the head unit connection information is from a vehicle key module in the terminal device, the vehicle key module is configured to trigger a vehicle lock module in the vehicle to control a vehicle lock, and the vehicle lock module is configured to control the vehicle lock to be unlocked or locked. The apparatus includes: a storage module, configured to store the head unit connection information from the vehicle key module in the terminal device, where the head unit connection information includes authentication information; a first receiving module, configured to receive a head unit connection request initiated by the head unit connection module in the vehicle, or initiate a head unit connection request when a start signal of the head unit is detected; a searching module, configured to search the head unit connection information stored by the storage module for head unit connection information matching the head unit connection request received by the first receiving module; an obtaining module, configured to obtain authentication information from the head unit connection information found by the searching module; and a returning module, configured to return, to the head unit connection module, the authentication information obtained by the obtaining module, to establish a head unit channel connection through which the terminal connection module communicates with the head unit connection module.

According to a sixth aspect, in a first possible implementation of the head unit connection apparatus, the apparatus further includes: a second receiving module, configured to receive the head unit connection information sent by the vehicle key module; and the storage module is further configured to store the received head unit connection information in a secure element SE, or store the received head unit connection information in a trusted execution environment TEE, or store the received head unit connection information after software-based encryption.

According to a seventh aspect, an embodiment of this application provides an electronic device. The electronic device may perform the head unit connection method according to one or more of the first aspect or the plurality of possible implementations of the first aspect, or the head unit connection method according to the second aspect, or the head unit connection method according to one or more of the third aspect or the plurality of possible implementations of the third aspect.

According to an eighth aspect, an embodiment of this application provides a computer program product, including computer-readable code or a nonvolatile computer-readable storage medium carrying computer-readable code. When the computer-readable code is run in an electronic device, a processor in the electronic device performs the head unit connection method according to one or more of the first aspect or the plurality of possible implementations of the first aspect, or the head unit connection method according to the second aspect, or the head unit connection method according to one or more of the third aspect or the plurality of possible implementations of the third aspect.

These aspects and other aspects of this application are more concise and more comprehensive in descriptions of the following (a plurality of) embodiments.

### BRIEF DESCRIPTION OF DRAWINGS

Accompanying drawings included in this specification and constituting a part of this specification and this specification jointly show example embodiments, features, and aspects of this application, and are intended to explain principles of this application.
FIG. 1 is a schematic diagram of an implementation environment of a head unit connection method according to an embodiment of this application;
FIG. 2a is a schematic diagram of an architecture of a head unit connection system in a related technology;
FIG. 2b is a schematic interaction diagram of a head unit connection method in a related technology;
FIG. 2c shows an example of an application interface of a terminal connection module in a related technology;
FIG. 2d shows an example of an application interface of a terminal connection module in a related technology;
FIG. 3a is a schematic diagram of an architecture of a head unit connection system according to an embodiment of this application;
FIG. 3b-1 and FIG. 3b-2 are an interaction flowchart of a head unit connection method according to an embodiment of this application;
FIG. 3c-1 to FIG. 3c-3 are an interaction flowchart of a head unit connection method according to an embodiment of this application;

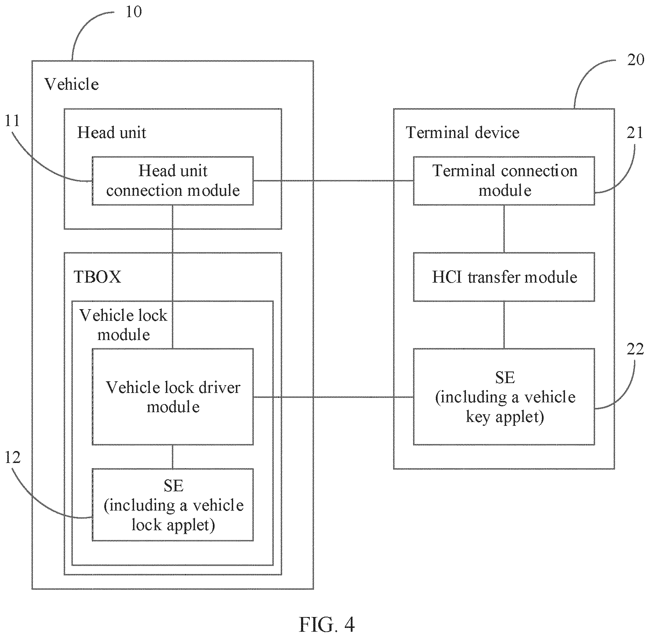

FIG. 4 is a schematic diagram of an architecture of a head unit connection system according to an embodiment of this application;

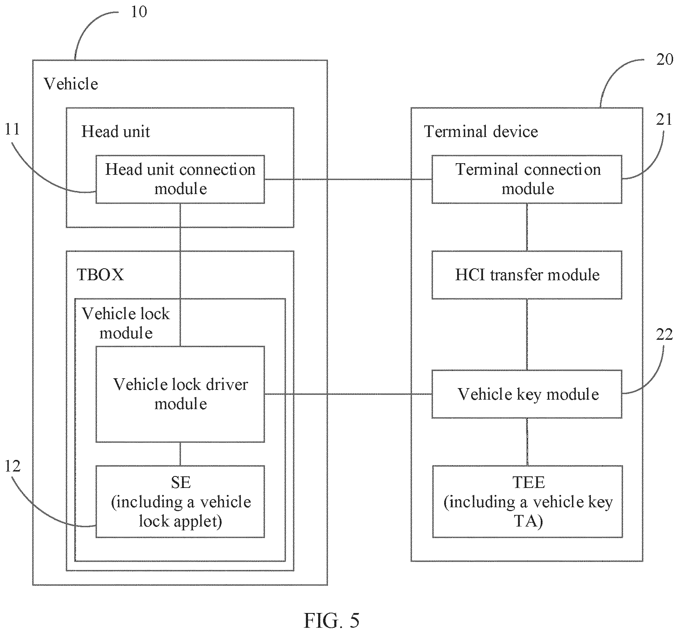

FIG. 5 is a schematic diagram of an architecture of a head unit connection system according to an embodiment of this application;

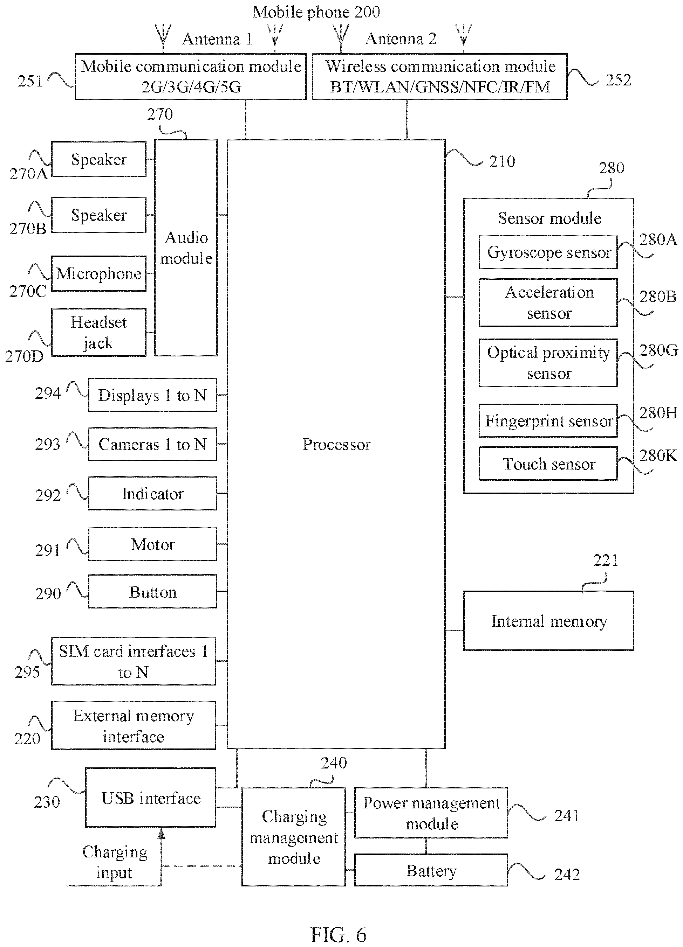

FIG. 6 is a schematic diagram of a structure of a terminal device according to an embodiment of this application;

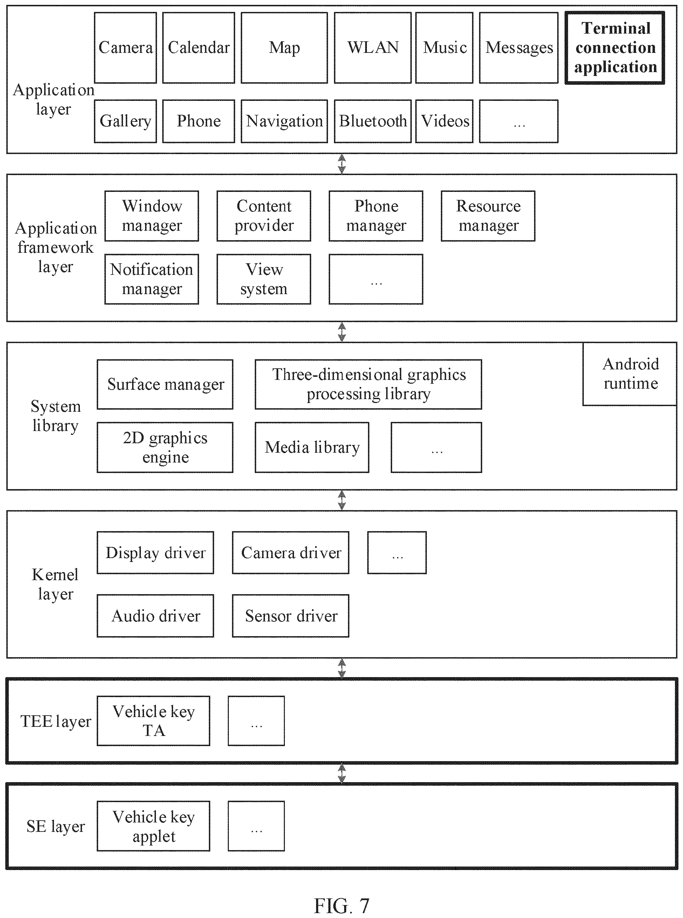

FIG. 7 is a block diagram of a software structure of a terminal device according to an embodiment of this application;

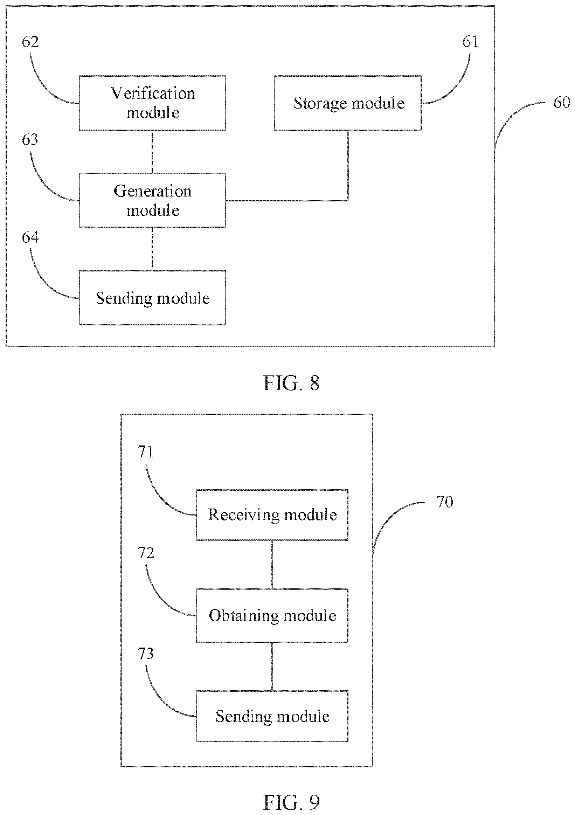

FIG. 8 is a block diagram of a structure of a head unit connection apparatus according to an embodiment of this application;
FIG. 9 is a block diagram of a structure of a head unit connection apparatus according to an embodiment of this application; and

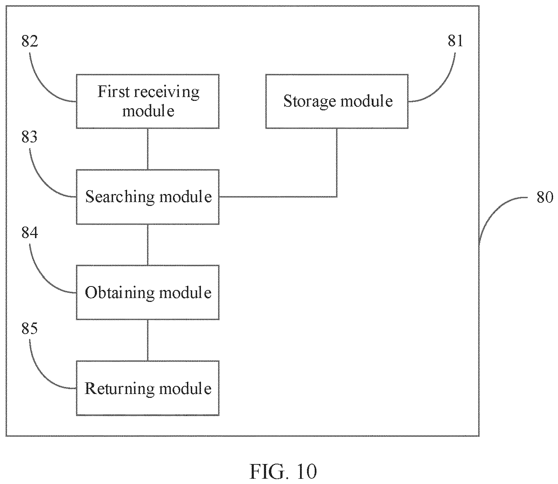

FIG. 10 is a block diagram of a structure of a head unit connection apparatus according to an embodiment of this application.

### DESCRIPTION OF EMBODIMENTS

The following describes various example embodiments, features, and aspects of this application in detail with reference to the accompanying drawings. Identical reference numerals in the accompanying drawings indicate components that have same or similar functions. Although various aspects of embodiments are illustrated in the accompanying drawing, the accompanying drawings are not necessarily drawn in proportion unless otherwise specified.

The specific term "example" herein means "used as an example, embodiment or illustration". Any embodiment described as an "example" is not necessarily explained as being superior or better than other embodiments.

In addition, numerous specific details are given in the following specific implementations to better describe this application. A person skilled in the art should understand that this application may also be implemented without the specific details. In some embodiments, methods, means, components, and circuits well known by a person skilled in the art are not described in detail, so that a main purpose of this application is highlighted.

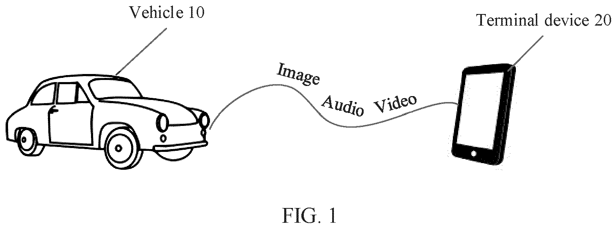

FIG. 1 is a schematic diagram of an implementation environment of a head unit connection method according to an embodiment of this application. As shown in FIG. 1, the implementation environment includes a vehicle 10 and a terminal device 20. After a head unit of the vehicle 10 establishes a head unit channel connection to the terminal device 20, data such as an image, audio, and a video may be transmitted between the head unit and the terminal device 20. In this case, a user may control the head unit in the vehicle 10 via the terminal device 20, for example, control the head unit in the vehicle 10 to play a song and a movie in the terminal device 20, or control the head unit in the vehicle 10 to display a navigation interface of the terminal device 20, or control the head unit in the vehicle 10 to display a chat interface of the terminal device 20.

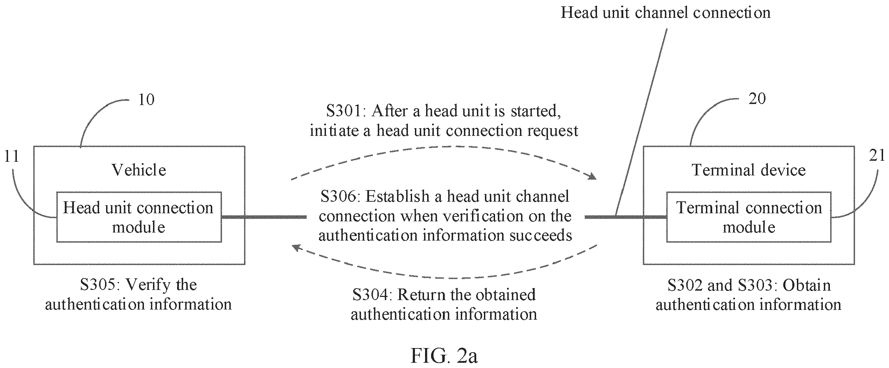

FIG. 2a is a schematic diagram of an architecture of a head unit connection system in a related technology. As shown in FIG. 2a, the system includes a vehicle 10 and a terminal device 20. The vehicle 10 includes a head unit connection module 11, and the terminal device 20 includes a terminal connection module 21. Ahead unit channel connection is established between the head unit connection module 11 and the terminal connection device 21, so that a head unit in the vehicle 10 can be connected to the terminal device.

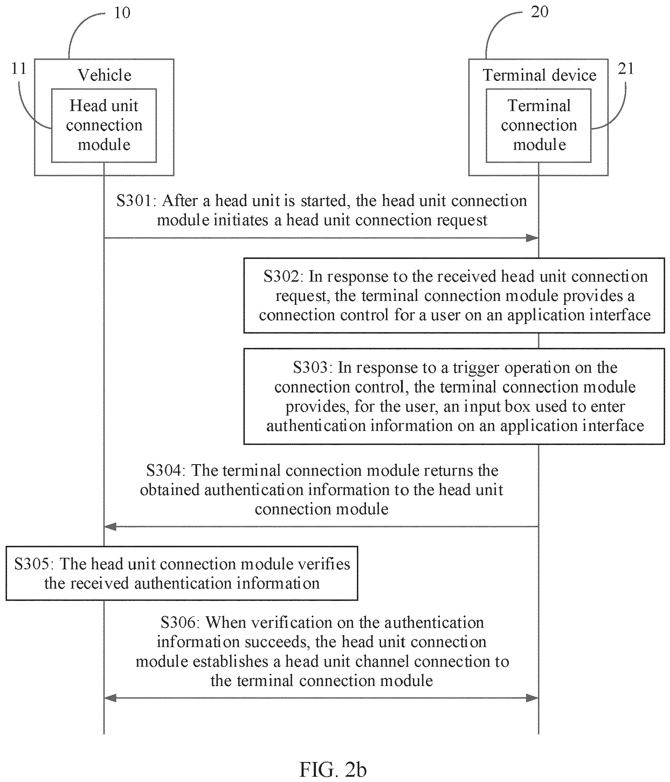

FIG. 2b is a schematic interaction diagram of a head unit connection method in a related technology. The method may be applied to the head unit connection system shown in FIG. 2a. As shown in FIG. 2b, the head unit connection method in the related technology may include step S301 to step S306.

Step S301: After a head unit is started, a head unit connection module initiates a head unit connection request.

Step S302: In response to the received head unit connection request, a terminal connection module provides a connection control for a user on an application interface.

Step S303: In response to a trigger operation on the connection control, the terminal connection module provides, for the user, an input box used to enter authentication information on an application interface.

Step S304: The terminal connection module returns the obtained authentication information to the head unit connection module.

Step S305: The head unit connection module verifies the received authentication information.

Step S306: When verification on the authentication information succeeds, the head unit connection module establishes a head unit channel connection to the terminal connection module.

The head unit channel connection may be used for communication between the head unit connection module and the terminal connection module.

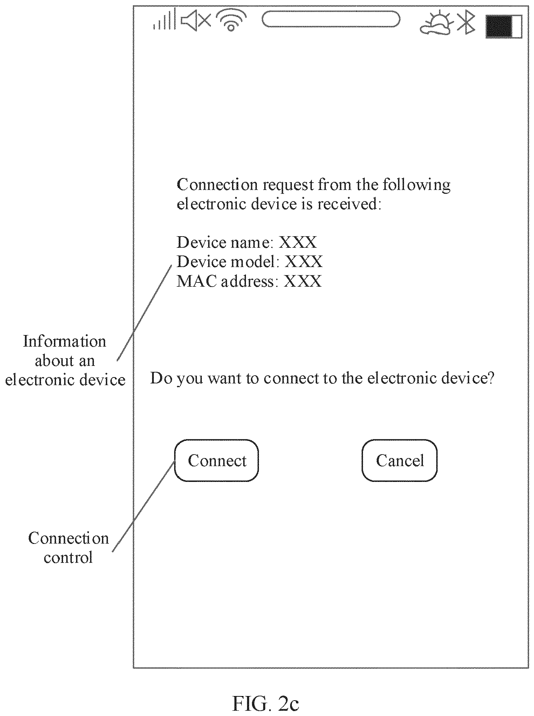

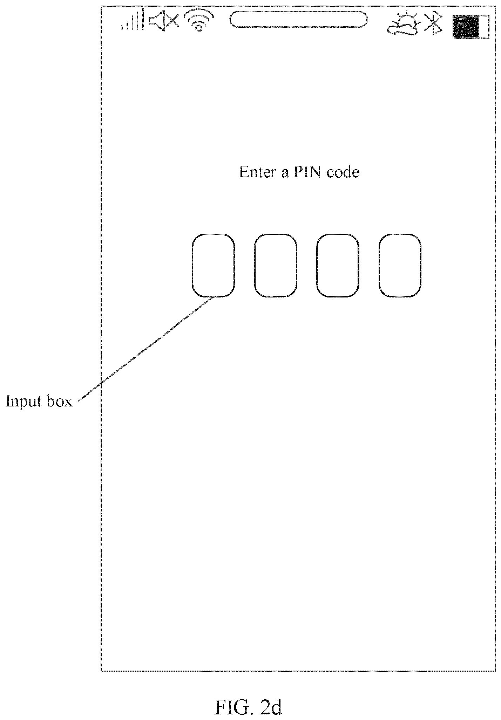

The following describes the head unit connection method shown in FIG. 2b with reference to FIG. 2a. After the user starts the head unit in the vehicle 10, the head unit connection module 11 may search for an available electronic device nearby, and initiate a head unit connection request to the available electronic device. In an example, the head unit connection module may send a head unit connection request to each available electronic device. In another example, the user may select one or more electronic devices from available electronic devices, and the head unit connection module 11 may send a head unit connection request to the one or more available electronic devices selected by the user. For example, the head unit connection module 11 may initiate a head unit connection request to the terminal device 20 in step S301. In step S302, in response to the received head unit connection request, the terminal connection module 21 in the terminal device 20 may provide a connection control for the user on an application interface. FIG. 2c shows an example of an application interface of a terminal connection module in a related technology. As shown in FIG. 2c, the application interface includes information (such as a device model, a device name, and a device MAC address) about an electronic device that requests to be connected, and a connection control used for connection to the electronic device. The user may determine, based on the information about the electronic device displayed on the application interface, whether to agree to connect, and the user may agree, by triggering the connection control, that the terminal connection module 21 establishes a head unit channel connection to the head unit connection module 11. In step S303, in response to a trigger operation on the connection control, the terminal connection module 21 may provide an input box for the user on an application interface. The user can enter authentication information, such as a PIN code, in the input box. FIG. 2d shows an example of an application interface of a terminal connection module in a related technology. As shown in FIG. 2d, the application interface includes an input box for entering a PIN code. The terminal connection module 21 may obtain the authentication information from the input box. In step S304, the terminal connection module 21 may return, to the head unit connection module 11, the authentication information obtained in step S302 and step S303. In step S305, the head unit connection module 11 may verify the received authentication information. In step S306, when verification on the authentication information succeeds, the head unit connection module 11 may establish a head unit channel connection to the terminal connection module 21. Data may be transmitted between the head unit in the vehicle 10 and the terminal device 20 through the head unit channel connection. In this case, a connection is established between the head unit in the vehicle 10 and the terminal device 20.

In addition, in the related technology, the terminal connection module 21 may store the PIN code, to help automatically connect to the head unit subsequently. However, after the connection is aged, the terminal connection module 21 clears the stored PIN code. In this case, if the terminal device 20 needs to connect to the head unit in the vehicle 10 again, the terminal device 20 still needs to perform step S301 to step S306.

It can be learned that in the related technology, when the terminal device is connected to the head unit for the first time, or when the terminal device is connected to the head unit again after an existing connection is aged and cleared, authentication information needs to be manually entered on the terminal device. In this way, operations are inconvenient, and user experience is affected.

To resolve the foregoing problem, an embodiment of this application provides a head unit connection method, so that a terminal device and a head unit implement an automatic connection that is not perceived by a user, and the user does not need to manually enter authentication information, which improves convenience of a head unit connection and effectively improves user experience.

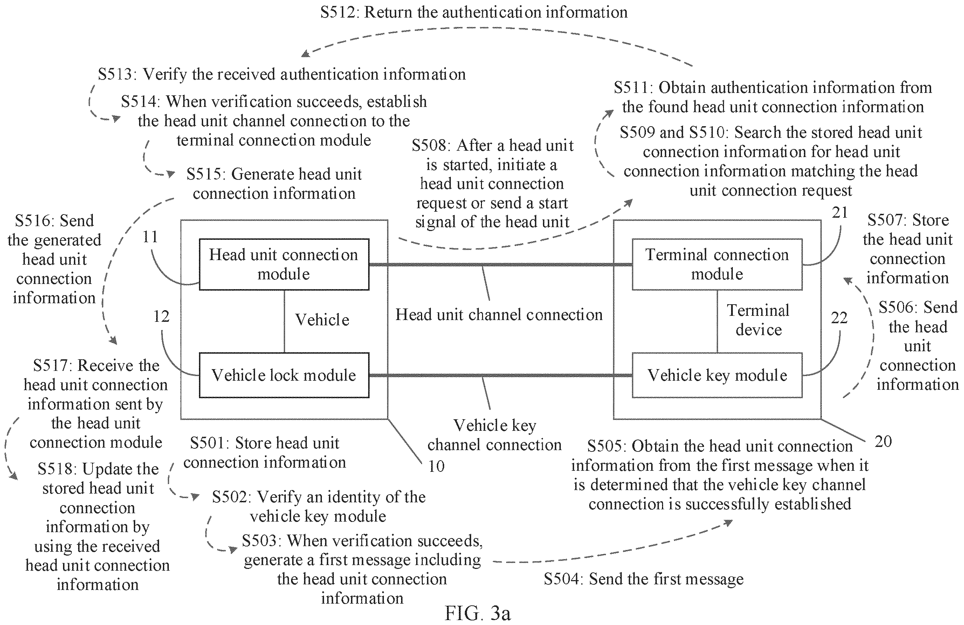

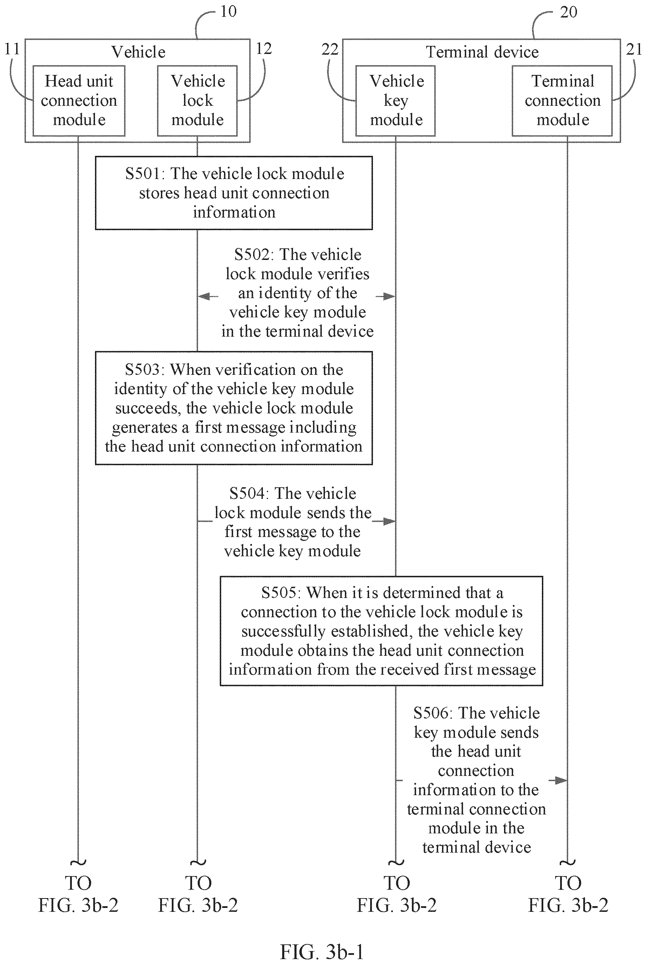

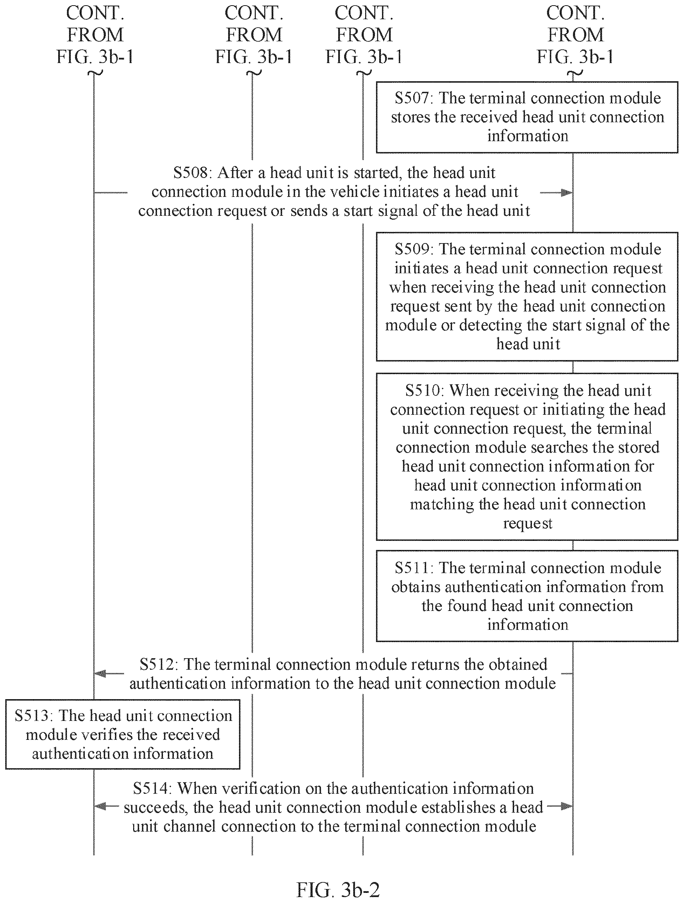

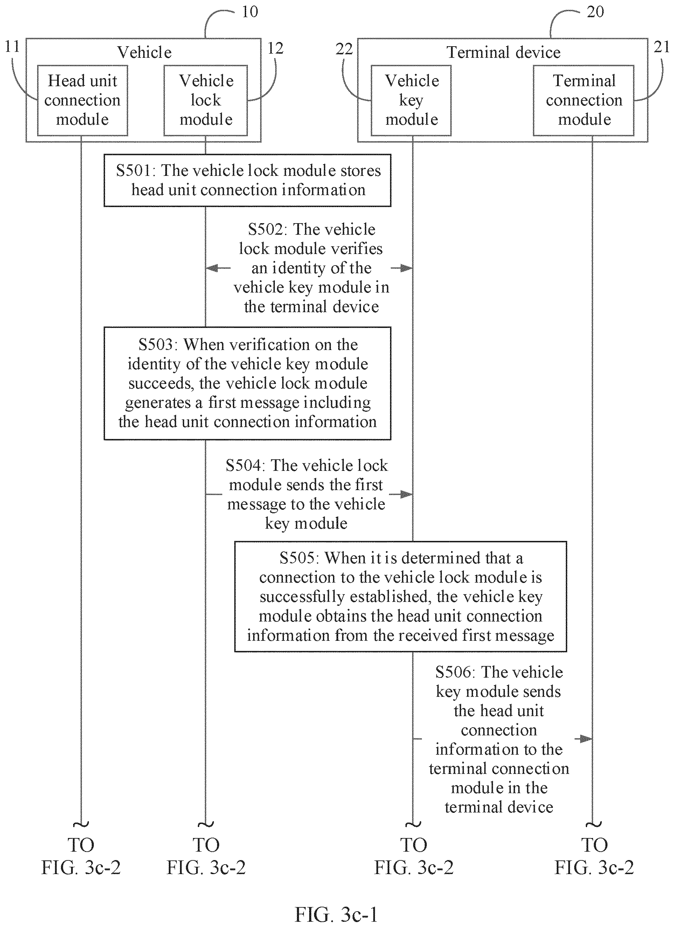

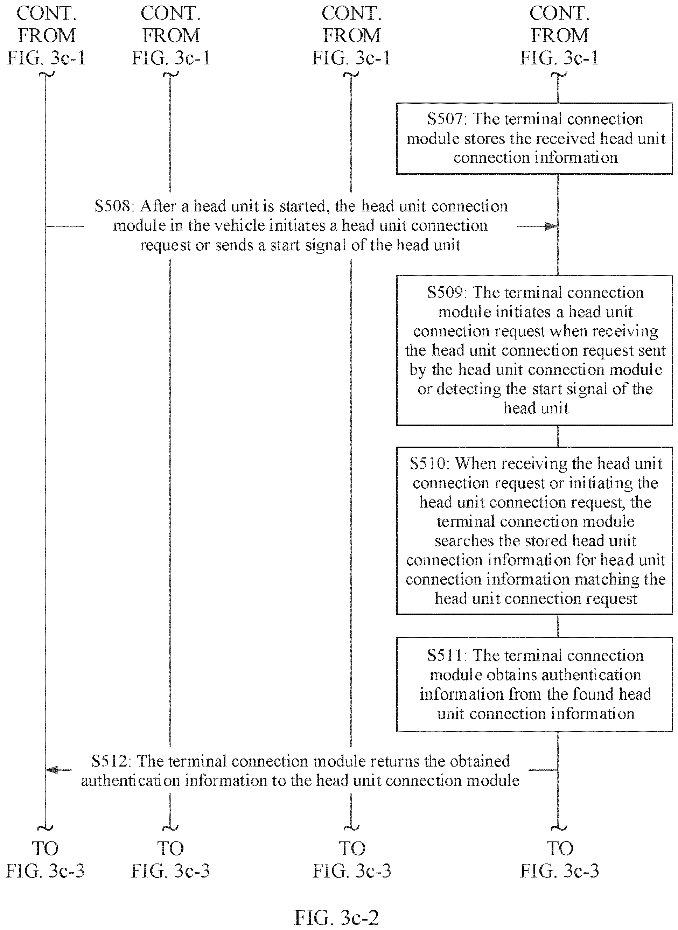

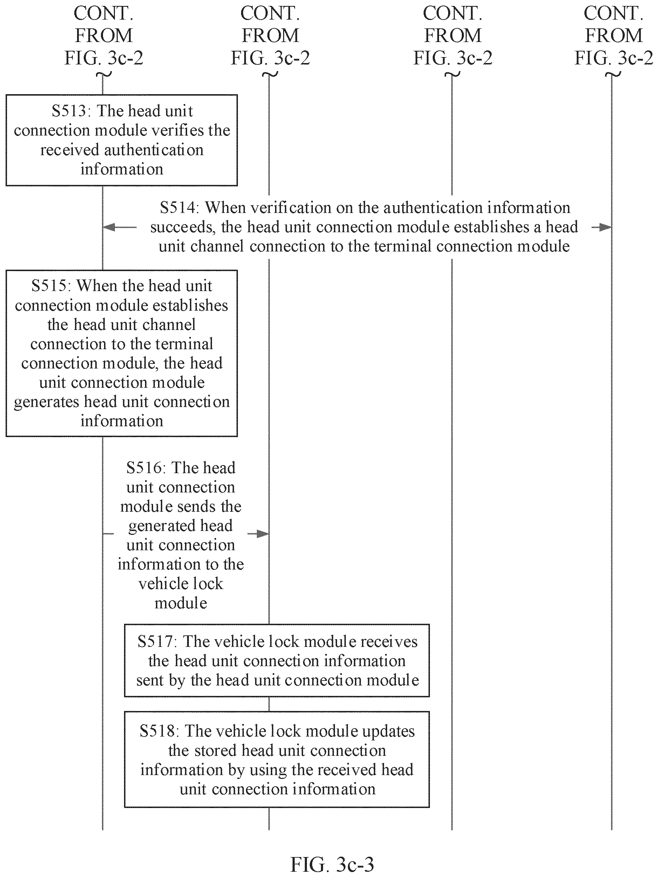

FIG. 3a is a schematic diagram of an architecture of a head unit connection system according to an embodiment of this application. As shown in FIG. 3a, the system includes a vehicle 10 and a terminal device 20. The vehicle 10 includes a head unit connection module 11 and a vehicle lock module 12, and the terminal device 20 includes a terminal connection module 21 and a vehicle key module 22.

A head unit channel connection between the head unit connection module 11 and the terminal connection module 21 is used to transmit data such as an image, audio, and a video between the terminal device 20 and a head unit in the vehicle 10. The terminal connection module 21 in the terminal device 20 may be configured to transmit data to the head unit connection module 11 in the vehicle 10, and the head unit connection module 11 may be configured to transmit data to the head unit in the vehicle 10. In an example, the terminal connection module 21 may send audio to the head unit connection module 11 through the head unit channel connection. After receiving the audio, the head unit connection module 11 may send the audio to the head unit for playing.

A vehicle key channel connection between the vehicle lock module 12 and the vehicle key module 22 is used to transmit data such as an unlock signal, a lock signal, and vehicle lock status information between the terminal device 20 and a vehicle lock in the vehicle 10. The vehicle lock module 12 in the vehicle 10 is configured to control the vehicle lock to be unlocked or locked, and the vehicle key module 22 in the terminal device 20 may be configured to trigger the vehicle lock module 12 to control the vehicle lock.

The vehicle key channel connection between the vehicle lock module 12 and the vehicle key module 22 may be a wireless connection, for example, near field communication (Near Field Communication, NFC) or Bluetooth. This is not limited in this application. The following describes a process of establishing a head unit channel connection between the vehicle lock module 12 and the vehicle key module 22 by using a Bluetooth connection as an example. When the user holds the terminal device 20 to approach the vehicle 10, the vehicle key module 22 continuously sends a Bluetooth signal (for NFC communication, an NFC signal is sent herein, and in this embodiment of this application, the Bluetooth signal, the NFC signal, and another wireless signal sent by the vehicle key module 22 may be collectively referred to as a connection signal). After detecting the Bluetooth signal, the vehicle lock module 12 establishes an initial connection to the vehicle key module 22. Then, the vehicle lock module 12 verifies an identity of the vehicle key module 22 by sending challenge data. When verification on the identity of the vehicle key module 22 succeeds, the vehicle lock module 12 establishes a vehicle key channel connection to the vehicle key module 22. Then, the vehicle lock module 12 may send a vehicle key verification success message to the vehicle key module 22 through the vehicle key channel connection. After receiving the vehicle key verification success message, the vehicle key module 22 may determine that a vehicle key channel connection to the vehicle lock module 12 is successfully established. In this case, the user may perform an unlock operation or a lock operation on the vehicle key module 22 of the terminal device 20. The vehicle key module 22 generates an unlock signal or a lock signal in response to the unlock operation or the lock operation, and then sends the unlock signal or the lock signal to the vehicle lock module 12 through the vehicle key channel connection. In response to the received unlock signal or lock signal, the vehicle lock module 12 controls the vehicle lock (for example, a cab lock or a rear trunk door lock) in the vehicle 10 to be unlocked or locked. The vehicle lock module 12 may send the vehicle lock status information to the vehicle key module 22 through the vehicle key channel connection. The user may learn, from the terminal device 20 by using the vehicle key module 22, whether each vehicle lock in the vehicle 10 is in an unlocked state or a locked state.

In the foregoing implementation process, the vehicle key verification success message is sent by the vehicle lock module 12 after verification on the identity of the vehicle key module 22 succeeds. Therefore, when receiving the vehicle key verification success message, the vehicle key module 22 may determine that the vehicle key channel connection to the vehicle lock module 12 is successfully established, and the identity of the vehicle lock module 12 is trusted. Based on this, head unit connection information received through the vehicle key channel connection is also trusted, and this transmission process does not cause leakage of the head unit connection information.

In this embodiment of this application, after verification on the identity of the vehicle key module 22 succeeds, the vehicle lock module 12 may generate a first message including the head unit connection information, and send the first message to the vehicle key module 22 through the vehicle key channel connection. The vehicle key module 22 may obtain the head unit connection information from the received first message.

During implementation, the first message may be the vehicle key verification success message. In other words, after verification on the identity of the vehicle key module 22 succeeds, the vehicle lock module 12 may generate the vehicle key verification success message including the head unit connection information, and send the vehicle key verification success message to the vehicle key module 22 through the vehicle key channel connection. The vehicle key module 22 may determine, based on the received vehicle key verification success message, that the vehicle key channel connection to the vehicle lock module 12 is successfully established. In this way, the head unit connection information may be obtained from the received vehicle key verification success message.

During implementation, the first message may alternatively be another message other than the vehicle key verification success message. After verification on the identity of the vehicle key module 22 succeeds, the vehicle lock module 12 may generate the vehicle key verification success message and a first message including the head unit connection information, and send the vehicle key verification success message and the first message to the vehicle key module 22 through the vehicle key channel connection. The vehicle key module 22 may determine, based on the received vehicle key verification success message, that the vehicle key channel connection to the vehicle lock module 12 is successfully established, and then may obtain the head unit connection information from the received first message. It should be noted that, if the vehicle key module 22 receives the first message but does not receive the vehicle key verification success message, the vehicle key module 22 may consider that the vehicle key channel connection to the vehicle lock module 12 fails to be established, and the received first message is untrusted, and then determine that the head unit connection information in the first message is invalid.

In this embodiment of this application, the head unit connection information may include head unit device information (such as a device name or a device ID), wireless connection information (such as a Bluetooth MAC address), and authentication information (such as PIN code). The head unit device information and the wireless connection information are used to identify a to-be-connected head unit, and the authentication information is used to verify the to-be-connected head unit.

When it is determined that the vehicle key channel connection to the vehicle lock module 12 is successfully established, the vehicle key module 22 may obtain the head unit connection information from the first message, and send the head unit connection information to the terminal connection module 21, so that the terminal connection module 21 establishes the head unit channel connection to the head unit connection module 11 based on the authentication information in the head unit connection information. In this way, a connection between the terminal connection module 21 and the head unit connection module 11 can be implemented without a need for the user to manually enter the authentication information in the terminal connection module 21. In an example, the head unit channel connection established between the head unit connection module 11 and the terminal connection module 21 may be a wireless connection such as NFC or Bluetooth. This is not limited in this application.

During actual application, for the process of establishing a vehicle key channel connection between the vehicle key module 22 and the vehicle lock module 12, refer to a process of establishing a payment connection between a payment card and a sales terminal (Point of sale, POS) machine, or a process of establishing a card swiping connection between a bus card and a card reader. A difference lies in that the vehicle lock module 12 stores a head unit connection message, and in the process of establishing a vehicle key channel connection between the vehicle key module 22 and the vehicle lock module 12, in addition to information required for establishing the connection, the vehicle lock module 12 further sends the head unit connection message to the vehicle key module 22.

During actual application, for a process of establishing a head unit channel connection between the head unit connection module 11 and the terminal connection module 21, refer to a process of establishing a projection connection between a mobile phone and a television set during projection. A difference lies in that the terminal connection module 21 may obtain the authentication information from the vehicle key module without the need for the user to manually enter the authentication information in the terminal connection module 21.

To improve convenience of a head unit connection, an embodiment of this application provides a head unit connection method. FIG. 3b-1 and FIG. 3b-2 are an interaction flowchart of a head unit connection method according to an embodiment of this application. The method may be applied to the system shown in FIG. 3b-1 and FIG. 3b-2. As shown in FIG. 3b-1 and FIG. 3b-2, the head unit connection method may include step S501 to step S514.

Step S501: A vehicle lock module stores head unit connection information.

Step S502: The vehicle lock module verifies an identity of a vehicle key module in a terminal device.

Step S503: When verification on the identity of the vehicle key module succeeds, the vehicle lock module generates a first message including the head unit connection information.

Step S504: The vehicle lock module sends the first message to the vehicle key module.

In a possible implementation, when verification on the identity of the vehicle key module succeeds, the vehicle lock module establishes a vehicle key channel connection to the vehicle key module, and the vehicle lock module sends the first message to the vehicle key module through the vehicle key channel connection.

Step S505: When it is determined that the vehicle key channel connection to the vehicle lock module is successfully established, the vehicle key module obtains the head unit connection information from the received first message.

A vehicle key channel is used for communication between the vehicle key application and the vehicle lock application.

In a possible implementation, when verification on the identity of the vehicle key module succeeds, the vehicle key module sends a vehicle key verification success message to the vehicle key module; and when receiving the vehicle key verification success message, the vehicle key module determines that the vehicle key channel connection to the vehicle lock module is successfully established. In other words, in this step, when the vehicle key verification success message sent by the vehicle key module is received, the vehicle key module obtains the head unit connection information from the received first message.

Step S506: The vehicle key module sends the head unit connection information to a terminal connection module in the terminal device.

Step S507: The terminal connection module stores the received head unit connection information.

Step S508: After a head unit is started, a head unit connection module in a vehicle initiates a head unit connection request or sends a start signal of the head unit.

Step S509: The terminal connection module initiates a head unit connection request when receiving the head unit connection request sent by the head unit connection module or detecting the start signal of the head unit.

Step S510: When receiving the head unit connection request or initiating the head unit connection request, the terminal connection module searches the stored head unit connection information for head unit connection information matching the head unit connection request.

Step S511: The terminal connection module obtains authentication information from the found head unit connection information.

Step S512: The terminal connection module returns the obtained authentication information to the head unit connection module.

Step S513: The head unit connection module verifies the received authentication information.

Step S514: When verification on the authentication information succeeds, the head unit connection module establishes a head unit channel connection to the terminal connection module.

The head unit channel connection is used for communication between the head unit connection module and the terminal connection module.

In this embodiment of this application, the authentication information is transferred by using the first message, so that the terminal connection module can obtain the authentication information without a need of manually entering the authentication information. Therefore, the terminal connection module and the head unit connection module implement an automatic connection that is not perceived by a user. This improves convenience and user experience.

The following describes in detail the head unit connection method shown in FIG. 3b-1 and FIG. 3b-2 with reference to FIG. 3a.

First, the vehicle lock module 12 stores head unit connection information. In a possible implementation, the head unit connection information may be obtained by the vehicle lock module 12 when the head unit is delivered from a factory, for example, may be preset in the vehicle lock module 12 of the head unit when the head unit is delivered from the factory, or may be sent by the head unit connection module 11 when the head unit is delivered from the factory. In a possible implementation, the head unit connection information may alternatively be updated. For example, the head unit connection information may be generated and sent by the head unit connection module 11 when the head unit connection module 11 successfully establishes a head unit channel connection to the terminal connection module 21. In this embodiment of this application, a source of the head unit connection information stored in the vehicle lock module 12 is not limited.

In a possible implementation, the vehicle lock module 12 may store the head unit connection information in a secure element (Secure Element, SE), or store the head unit connection information in a trusted execution environment (Trusted Execution Environment, TEE), or store the head unit connection information after software-based encryption. In this way, the stored head unit connection information is not easy to be leaked and tampered with, and the security is improved.

In step S502, the vehicle lock module 12 may search for an available electronic device, and after the vehicle lock module 12 finds the vehicle key module 22 of the terminal device 20, the vehicle lock module 12 may verify the identity of the vehicle key module 22. In a possible implementation, the vehicle lock module 12 may send challenge data to the vehicle key module 22 to verify the identity of the vehicle key module 22. In this embodiment of this application, an identity manner of the vehicle key module 22 is not limited.

In step S503 to step S505, when verification on the identity of the vehicle key module 22 succeeds, it indicates that the vehicle key module 22 has permission to control the vehicle lock in the vehicle 10. In this case, the head unit connection information is sent to the vehicle key module 22, which does not cause leakage of the head unit connection information. Therefore, when verification on the identity of the vehicle key module 22 succeeds, the vehicle lock module 12 may generate a first message including the head unit connection information, and send the first message to the vehicle key module 22.

In a possible implementation, the vehicle lock module 12 may reconstruct a vehicle key verification success message, add the head unit connection information to the vehicle key verification success message, and send, to the vehicle key module 22, the vehicle key verification success message including the head unit connection information as a first message. When receiving the vehicle key verification success message, the vehicle key module 22 may determine that the vehicle key module 22 successfully establishes a vehicle key channel connection to the vehicle lock module 12, and the vehicle key module 22 obtains the permission to control the vehicle lock in the vehicle 10. In this case, the vehicle key module 22 may obtain the head unit connection message from the received vehicle key verification success message. A format of the vehicle key verification success message is related to a communication protocol between the vehicle lock module 12 and the vehicle key module 22. The format of the vehicle key verification success message is not limited in this embodiment of this application. For example, the vehicle key verification success message is a message in an application protocol data unit (Application Protocol Data Unit, APDU) format, and the head unit connection information may be added to an additional field of the vehicle key verification success message.

In a possible implementation, in addition to generating the vehicle key verification success message, the vehicle lock module 12 may further generate a first message including the head unit connection information. The vehicle lock module 12 may send the vehicle key verification success message and the first message to the vehicle key module 22. When receiving the vehicle key verification success message, the vehicle key module 22 determines that the vehicle key module 22 successfully establishes a vehicle key channel connection to the vehicle lock module 12, and the vehicle key module 22 obtains the permission to control the vehicle lock in the vehicle 10. In this case, the vehicle key module 22 may obtain the head unit connection message from the received first message.

In step S506, the vehicle key module 22 may send, to the terminal connection module 21, the head unit connection information obtained from the first message.

In step S507, the terminal connection module 21 may store the received head unit connection information. In a possible implementation, the terminal connection module 21 may store the received head unit connection information in an SE, or store the received head unit connection information in a TEE, or store the received head unit connection information after software-based encryption. In this way, the stored head unit connection information is not easy to be leaked and tampered with, and the security is improved.

In this case, the terminal connection module 21 obtains the authentication information (the head unit connection information includes the authentication information) without a need of manually entering the authentication information. The terminal connection module 21 may establish a head unit channel connection to the head unit connection module 11 based on the obtained authentication information, to implement data transmission between the terminal device 20 and the head unit of the vehicle 10.

In step S508 to step S509, the head unit connection module 11 or the terminal connection module 21 may initiate a head unit connection request. In an example, after the head unit of the vehicle 10 is started, the head unit connection module 11 may search for an available electronic device, and initiate a head unit connection request to the available electronic device. In this embodiment of this application, the head unit connection module 11 may initiate a head unit connection request to the terminal connection module 21 in the terminal device 20. In another example, after the head unit of the vehicle 10 is started, the head unit connection module 11 may send a start signal of the head unit. When receiving the start signal of the head unit, the terminal connection module 21 may initiate a head unit connection request, and send the head unit connection request to the head unit connection module 11.

In step S510 to step S511, when receiving the head unit connection request or initiating the head unit connection request, the terminal connection module 21 may search the stored head unit connection information for head unit connection information matching the head unit connection request.

During implementation, the head unit connection request includes head unit device information and wireless connection information. The head unit connection information includes head unit device information, wireless connection information, and the authentication information. When the head unit device information and the wireless connection information in the head unit connection request are respectively consistent with head unit device information and wireless connection information in a piece of stored head unit connection information, it indicates that the head unit requesting connection and a head unit corresponding to the head unit connection information is a same head unit, and a head unit channel connection may be established to the head unit requesting connection based on authentication information in the head unit connection information. Therefore, when the head unit connection information matching the head unit connection request is found, the terminal connection module 21 may obtain the authentication information from the found head unit connection information.

In step S512, the terminal connection module 21 may return the obtained authentication information to the head unit connection module 11. When the terminal connection module 21 receives the head unit connection request, the terminal connection module 21 may send a response including the authentication information to the head unit connection module 11. When the terminal connection module 21 initiates the head unit connection request, the terminal connection module may send, to the head unit connection module 11, a head unit connection request including the authentication information.

In step S513 and step S514, the head unit connection module 11 may verify the received authentication information. When verification succeeds, the head unit connection module 11 establishes the head unit channel connection to the terminal connection module 21.

In this way, the terminal connection module 21 completes a connection to the head unit connection module 11 without a need of manually entering the authentication information. Therefore, the terminal device 20 and the head unit of the vehicle 10 implement an automatic connection that is not perceived by the user. This improves convenience and user experience.

By comparing FIG. 2b with FIG. 3b-1 and FIG. 3b-2, it can be learned that, in FIG. 2b, the terminal connection module 21 obtains the authentication information by using step S302 and step S303, and this process requires the user to manually enter the authentication information; however, in FIG. 3b-1 and FIG. 3b-2, the terminal connection module 21 obtains the authentication information by using step S501, steps S503 to S507, step S510, and step S511, and this process is not perceived by the user. Therefore, compared with the head unit connection method provided in the related technology, the head unit connection method provided in this embodiment of this application improves convenience and user experience.

Considering that the authentication information may be leaked in a process in which the terminal connection module sends the authentication information to the head unit connection module, in the head unit connection method provided in this embodiment of this application, the authentication information becomes invalid after being used once, thereby improving security. FIG. 3c-1 to FIG. 3c-3 are an interaction flowchart of a head unit connection method according to an embodiment of this application. As shown in FIG. 3c-1 to FIG. 3c-3, on the basis of FIG. 3b-1 and FIG. 3b-2, after step S514, the method further includes step S515 to step S518.

Step S515: When the head unit connection module establishes the head unit channel connection to the terminal connection module, the head unit connection module generates head unit connection information.

Step S516: The head unit connection module sends the generated head unit connection information to the vehicle lock module.

Step S517: The vehicle lock module receives the head unit connection information sent by the head unit connection module.

Step S518: The vehicle lock module updates the stored head unit connection information by using the received head unit connection information.

The following describes the method shown in FIG. 3c-1 to FIG. 3c-3 with reference to FIG. 3a. After the head unit connection module 11 establishes the head unit channel connection to the terminal connection module 21, it indicates that previous authentication information undergoes a transmission process from the terminal connection module 21 to the head unit connection module 11 and may be leaked. Therefore, the head unit connection module 11 may generate new head unit connection information, and send the newly generated head unit connection information to the vehicle lock module 12. After receiving the new head unit connection information, the vehicle lock module 12 may update the stored head unit connection information by using the received head unit connection information. In this way, when the user uses the vehicle 10 next time, the vehicle lock module 12 may transfer the new head unit connection information to the vehicle lock module 12 by using the first message, and then transfer the new head unit connection information to the terminal connection module 21, so that the terminal connection module 21 may connect to the head unit connection module 11 by using authentication information in the new head unit connection information. During this period, another terminal device cannot establish a head unit channel connection to the head unit connection module 11 by using the authentication information in the previous head unit connection information. Therefore, security is improved.

In this embodiment of this application, each piece of authentication information is discarded once used, thereby reducing a security risk caused by authentication information leakage, and improving security.

To reduce a possibility of authentication information leakage in a process of transmitting the authentication information from the terminal connection module to the head unit connection module, in this embodiment of this application, a public key and a private key for communication are configured between the terminal connection module and the head unit connection module, and when asymmetric encryption can be performed on communication data between the terminal connection module and the head unit connection module, it indicates that security of data transmission between the terminal connection module and the head unit connection module is relatively high. In this case, the authentication information may be repeatedly used for a plurality of times. In this way, storage space can be saved and signaling interaction can be reduced on the premise of ensuring data security. However, when the asymmetric encryption cannot be performed on the communication data between the terminal connection module and the head unit connection module, the method shown in FIG. 3c-1 to FIG. 3c-3 can be used, so that the authentication information is discarded once used, to improve security. Certainly, when the asymmetric encryption can be performed on the communication data between the terminal connection module and the head unit connection module, the authentication information may also be discarded once used. In this way, security can be further improved.

FIG. 4 is a schematic diagram of an architecture of a head unit connection system according to an embodiment of this application. As shown in FIG. 4, the system includes a vehicle 10 and a terminal device 20. The vehicle 10 may include a head unit and a communication box (TBOX). Ahead unit connection module 11 is deployed in the head unit, and a vehicle lock module 12 is deployed in an SE (namely, a vehicle lock applet) of the TBOX. A vehicle key module 22 may be deployed in an SE (namely, a vehicle key applet) of the terminal device 20. In this way, security of a vehicle key can be ensured. The vehicle lock module 12 and the vehicle key module 22 may communicate with each other by using a vehicle lock driver module in the TBOX. A first message is generated by the vehicle lock applet, and is parsed by the vehicle key applet.

As shown in FIG. 4, the terminal device 20 of the system further includes a host control interface (Host Controller Interface, HCI) transfer module. The HCI module may transmit data in a low-layer application to a high-layer application. In this embodiment of this application, the HCI transfer module may transmit, to a terminal connection module 21, head unit connection information obtained through parsing by the vehicle key applet.

FIG. 5 is a schematic diagram of an architecture of a head unit connection system according to an embodiment of this application. As shown in FIG. 5, a terminal device 20 may further deploy a vehicle key TA in a TEE, and the TA and a vehicle key module 22 in a rich execution environment (Rich Execution Environment, REE) jointly obtain head unit connection information. After receiving a first message, the vehicle key module 22 sends the message to the vehicle key TA for parsing to obtain the head unit connection information. Then, the vehicle key TA sends the head unit connection information obtained through parsing to the vehicle key module 22, and the vehicle key module 22 sends the head unit connection information to a terminal connection module 21 by using an HCI transfer module. By parsing the first message in the vehicle key TA, security of the head unit connection information can also be ensured in a terminal device that does not have a standby SE.

It should be noted that a vehicle lock module may be deployed in a TBOX, or may be deployed in another module connected to a vehicle lock. This is not limited in this application.

A terminal device (for example, the terminal device 20 shown in FIG. 3a, FIG. 4, and FIG. 5) in this application may be a device having a wireless connection function. The wireless connection function means that the terminal device may be connected to another electronic device (for example, a head unit or a TBOX) in a wireless connection manner such as Bluetooth or NFC. The terminal device in this application may be touchscreen, or may be non-touchscreen, or may have no screen. The touchscreen may control the terminal device in a manner of tapping, sliding, or the like on a display by using a finger, a stylus, or the like. A non-touchscreen device may be connected to an input device such as a mouse, a keyboard, or a touch panel, and controls the terminal device by using the input device. A device without a screen may be, for example, a Bluetooth speaker without a screen.

For example, the terminal device in this application may be a smartphone, a netbook, a tablet computer, a notebook computer, a wearable electronic device (such as a smart band or a smartwatch), a TV, a virtual reality device, a sound box, or the like.

FIG. 6 is a schematic diagram of a structure of a terminal device according to an embodiment of this application. For example, a terminal device 20 is a mobile phone. FIG. 6 is a schematic diagram of a structure of a mobile phone 200.

The mobile phone 200 may include a processor 210, an external memory interface 220, an internal memory 221, a USB interface 230, a charging management module 240, a power management module 241, a battery 242, an antenna 1, an antenna 2, a mobile communication module 251, a wireless communication module 252, an audio module 270, a speaker 270A, a receiver 270B, a microphone 270C, a headset jack 270D, a sensor module 280, a button 290, a motor 291, an indicator 292, a camera 293, a display 294, a SIM card interface 295, and the like. The sensor module 280 may include a gyroscope sensor 280A, an acceleration sensor 280B, an optical proximity sensor 280G, a fingerprint sensor 280H, and a touch sensor 280K (certainly, the mobile phone 200 may further include other sensors such as a temperature sensor, a pressure sensor, a distance sensor, a magnetic sensor, an ambient light sensor, a barometric pressure sensor, and a bone conduction sensor, which are not shown in the figure).

It may be understood that an illustrated structure in this embodiment of this application does not constitute a specific limitation on the mobile phone 200. In other embodiments of this application, the mobile phone 200 may include more or fewer components than those shown in the figure, or combine some components, or split some components, or have a different component arrangement. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (Neural-network Processing Unit, NPU). Different processing units may be independent, or may be integrated into one or more processors. The controller may be a nerve center and a command center of the mobile phone 200. The controller may generate an operation control signal based on an instruction operation code and a time sequence signal, to complete control of instruction fetching and instruction execution.

A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor 210 may directly invoke the instructions or the data from the memory. This avoids repeated access and reduces waiting time of the processor 210, thereby improving system efficiency. In this embodiment of this application, the memory may be further configured to store head unit connection information.

The processor 210 may run the head unit connection method according to embodiments of this application, to conveniently connect to a head unit. The processor 210 may include different components. For example, when a CPU and a GPU are integrated, the CPU and the GPU may cooperate to perform the head unit connection method provided in embodiments of this application. For example, in the head unit connection method, some algorithms are executed by the CPU, and other algorithms are executed by the GPU, to obtain high processing efficiency.

The display 294 is configured to display an image, a video, or the like. The display 294 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the mobile phone 200 may include one or N displays 294, where N is a positive integer greater than 1. The display 294 may be configured to display information input by a user or information provided to a user, and various graphical user interfaces (graphical user interfaces, GUIs). For example, the display 294 may display a photo, a video, a web page, a file, or the like. For another example, the display 294 may display a graphical user interface. The graphical user interface includes a status bar, a navigation bar that can be hidden, a time and weather widget (widget), and an application icon, for example, a browser icon. The status bar includes an operator name (for example, China Mobile), a mobile network (for example, 4G), time, and a battery level. The navigation bar includes an icon of a back (back) button, an icon of a home (home) button, and an icon of a forward button. In addition, it may be understood that, in some embodiments, the status bar may further include a Bluetooth icon, a Wi-Fi icon, an icon of an external device, and the like. It may be further understood that, in some other embodiments, the graphical user interface may further include a dock bar, and the dock bar may include an icon of a frequently-used application and the like. After the processor 210 detects a touch event of a user on an application icon by using a finger (a stylus or the like), in response to the touch event, the processor 210 starts a user interface of an application corresponding to the application icon, and displays the user interface of the application on the display 294.

In this embodiment of this application, the display 294 may be one integrated flexible display, or may be a spliced display including two rigid screens and one flexible screen located between the two rigid screens.

After the processor 210 runs the head unit connection method according to embodiments of this application, the terminal device may establish a connection to another electronic device by using the antenna 1 and the antenna 2. For example, the terminal device establishes a vehicle key channel connection and a head unit channel connection to a vehicle.

The camera 293 (which may be a front-facing camera, a rear-facing camera, or a camera that may serve as both a front-facing camera and a rear-facing camera) is configured to capture a static image or a video. Usually, the camera 293 may include a photosensitive element such as a lens group and an image sensor. The lens group includes a plurality of lenses (convex lenses or concave lenses), and is configured to: collect an optical signal reflected by a to-be-photographed object, and transfer the collected optical signal to the image sensor. The image sensor generates an original image of the to-be-photographed object based on the optical signal.

The internal memory 221 may be configured to store computer-executable program code, and the executable program code includes instructions. The processor 210 runs the instructions stored in the internal memory 221, to implement various function applications and data processing of the mobile phone 200. The internal memory 221 may include a program storage area and a data storage area. The program storage area may store code of an operating system, an application (for example, a camera application or a WeChat application), and the like. The data storage area may store data (for example, an image or a video collected by the camera application) and the like that are created during use of the mobile phone 200.

The internal memory 221 may further store one or more computer programs 1310 corresponding to the head unit connection method according to embodiments of this application. One or more computer programs 1304 are stored in the memory 221 and configured to be executed by the one or more processors 210.

In addition, the internal memory 221 may include a high-speed random access memory, and may further include a nonvolatile memory, for example, at least one magnetic disk storage device, a flash memory device, or a universal flash storage (universal flash storage, UFS).

Certainly, the code corresponding to the head unit connection method according to embodiments of this application may alternatively be stored in an external memory. In this case, the processor 210 may run, by using the external memory interface 220, the code of the head unit connection method stored in the external memory.

A wireless communication function of the mobile phone 200 may be implemented by using the antenna 1, the antenna 2, the mobile communication module 251, the wireless communication module 252, the modem processor, the baseband processor, and the like.

The antenna 1 and the antenna 2 are configured to: transmit and receive electromagnetic wave signals. Each antenna in the mobile phone 200 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 251 may provide a wireless communication solution that includes 2G/3G/4G/5G or the like and that is applied to the mobile phone 200. The mobile communication module 251 may include at least one filter, a switch, a power amplifier, a low noise amplifier (low noise amplifier, LNA), and the like. The mobile communication module 251 may receive an electromagnetic wave by using the antenna 1, perform processing such as filtering and amplification on the received electromagnetic wave, and transmit a processed electromagnetic wave to the modem processor for demodulation. The mobile communication module 251 may further amplify a signal modulated by the modem processor, and convert the signal into an electromagnetic wave for radiation by using the antenna 1. In some embodiments, at least some functional modules in the mobile communication module 251 may be disposed in the processor 210. In some embodiments, at least some functional modules of the mobile communication module 251 and at least some modules of the processor 210 may be disposed in a same device. In this embodiment of this application, the mobile communication module 251 may be further configured to: exchange information with another electronic device, for example, send authentication information to a head unit connection module of a head unit, and receive a first message from a vehicle lock module of a TBOX.

The modem processor may include a modulator and a demodulator. The modulator is configured to modulate a to-be-sent low-frequency baseband signal into a medium/high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 270A, the receiver 270B, or the like), or displays an image or a video by the display 294. In some embodiments, the modem processor may be an independent component. In some other embodiments, the modem processor may be independent of the processor 210, and is disposed in the same device with the mobile communication module 251 or another functional module.

The wireless communication module 252 may provide a wireless communication solution that is applied to the mobile phone 200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 252 may be one or more devices integrating at least one communication processing module. The wireless communication module 252 receives an electromagnetic wave by using the antenna 2, performs frequency modulation and filtering on an electromagnetic wave signal, and sends a processed signal to the processor 210. The wireless communication module 252 may further receive a to-be-sent signal from the processor 210, perform frequency modulation and amplification on the signal, and convert the signal into an electromagnetic wave for radiation by using the antenna 2. In this embodiment of this application, the wireless communication module 252 is configured to transmit data with another terminal device under control of the processor 210.

The mobile phone 200 may implement an audio function such as music playing or recording by using the audio module 270, the speaker 270A, the receiver 270B, the microphone 270C, the headset jack 270D, the application processor, and the like. The mobile phone 200 may receive a button 290 input, and generate a button signal input related to a user setting and function control of the mobile phone 200. The mobile phone 200 may generate a vibration prompt (for example, an incoming call vibration prompt) by using the motor 291. The indicator 292 in the mobile phone 200 may be an indicator light, may be configured to indicate a charging status and a power change, and may be configured to indicate a message, a missed call, a notification, and the like. The SIM card interface 295 in the mobile phone 200 is configured to connect to a SIM card. The SIM card may be inserted into the SIM card interface 295 or removed from the SIM card interface 295, to come into contact with or be separated from the mobile phone 200.

A software system of a terminal device may use a layered architecture, an event driven architecture, a microkernel architecture, a microservice architecture, or a cloud architecture. In this embodiment of this application, an Android system with a layered architecture is used as an example to describe the software structure of the terminal device.

FIG. 7 is a block diagram of a software structure of a terminal device according to an embodiment of this application.

In a layered architecture, software is divided into several layers, and each layer has a clear division of roles and tasks. Layers communicate with each other through a software interface. In some embodiments, the Android system is divided into four layers, namely, an application layer, an application framework layer, an Android runtime (Android runtime) and system library, and a kernel layer from top to bottom.

The application layer may include a series of application packages.

As shown in FIG. 7, the application packages may include applications such as Phone, Camera, Gallery, Calendar, Calls, Map, Navigation, WLAN, Bluetooth, Music, Videos, and Messages. The application may further include a terminal connection application. The terminal connection application corresponds to a terminal connection module in this application, and the terminal connection application can be connected to a head unit connection module of a vehicle.

The application framework layer provides an application programming interface (application programming interface, API) and a programming framework for applications at the application layer. The application framework layer includes some predefined functions.

As shown in FIG. 7, the application framework layer may include a window manager, a content provider, a view system, a phone manager, a resource manager, a notification manager, and the like.

The window manager is configured to manage a window program. The window manager may obtain a size of a display, to determine whether there is a status bar, perform screen locking, take a screenshot, and the like.

The content provider is configured to: store and obtain data, and enable the data to be accessed by an application. The data may include a video, an image, audio, calls that are made and received, a browsing history, a bookmark, an address book, and the like. In this embodiment of this application, the content provider may be further configured to store head unit connection information.

The view system includes a visual control, for example, a control for displaying text or a control for displaying an image. The view system may be configured to construct an application. A display interface may include one or more views. For example, a display interface including an SMS notification icon may include a text display view and an image display view.

The phone manager is configured to provide a communication function of the terminal device, for example, management of a call status (including answering, declining, or the like).

The resource manager provides various resources for an application, such as a localized character string, an icon, an image, a layout file, and a video file.

The notification manager enables an application to display notification information in a status bar, and may be configured to transmit a notification-type message. The displayed information may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is displayed in the status bar, a prompt tone is produced, the terminal device vibrates, or an indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes Java files of the application layer and the application framework layer as binary files. The virtual machine is configured to perform functions such as object life cycle management, stack management, thread management, security and exception management, and garbage collection.

The system library may include a plurality of functional modules, for example, a surface manager (surface manager), a media library (Media library), a three-dimensional graphics processing library (for example, an OpenGL ES), and a 2D graphics engine (for example, an SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, compositing, layer processing, and the like.

The 2D graphics engine is a drawing engine for 2D drawing.

The kernel layer is a layer between hardware and software. The kernel layer includes at least a display driver, a camera driver, an audio driver, and a sensor driver.

In some embodiments, as shown in FIG. 7, the terminal device in this embodiment of this application further includes a TEE layer and an SE layer.

TEE is a trusted execution environment. The TEE layer indicates an operating system running in the TEE. The TEE layer is isolated from an REE (such as Android) during running. An interior of the TEE layer is divided into a kernel mode and a user mode. The user mode of the TEE layer may run a plurality of different TAs. In this embodiment of this application, the TEE layer may include a vehicle key TA. The TEE layer may further store the head unit connection information.

An SE is an independent hardware chip. The SE layer indicates an operating system running in the SE. The SE layer is isolated from the REE (such as Android) during running, and the hardware is isolated. A plurality of different applets may run in the SE layer. In this embodiment of this application, the SE layer may include a vehicle key applet (namely, a vehicle key module). The SE layer may further store the head unit connection information.

FIG. 8 is a block diagram of a structure of a head unit connection apparatus according to an embodiment of this application. The apparatus 60 is applied to a vehicle lock module in a vehicle, and the vehicle lock module is configured to control the vehicle lock to be unlocked or locked. As shown in FIG. 8, the apparatus 60 includes:
a storage module 61, configured to store head unit connection information;
a verification module 62, configured to verify an identity of a vehicle key module in a terminal device, where the vehicle key module is configured to trigger the vehicle lock module to control the vehicle lock;
a generation module 63, configured to: when verification performed by the verification module 62 on the identity of the vehicle key module succeeds, generate a first message including the head unit connection information stored by the storage module 61; and
a sending module 64, configured to send, to the vehicle key module, the first message generated by the generation module 63, so that a terminal connection module in the terminal device establishes, based on the head unit connection information, a head unit channel connection through which the terminal connection module communicates with a head unit connection module in the vehicle, where the terminal connection module is configured to transmit data to the head unit connection module, and the head unit connection module is configured to transmit data to a head unit in the vehicle.

In a possible implementation, the apparatus further includes: a verification module, configured to: when a connection signal sent by the vehicle key module is detected, verify the identity of the vehicle key module by using challenge data; and an establishment module, configured to: when verification on the identity of the vehicle key module succeeds, establish a vehicle key channel connection through which the vehicle lock module communicates with the vehicle key module; and the sending module is further configured to send the first message to the vehicle key module through the vehicle key channel connection.

In a possible implementation, the apparatus further includes: a receiving module, configured to receive head unit connection information sent by the head unit connection module, where the head unit connection information is generated when the head unit connection module successfully establishes the head unit channel connection; and an update module, configured to update the stored head unit connection information by using the received head unit connection information.

In a possible implementation, the storage module is further configured to: store the head unit connection information in a secure element SE, or store the head unit connection information in a trusted execution environment TEE, or store the head unit connection information after software-based encryption.

FIG. 9 is a block diagram of a structure of a head unit connection apparatus according to an embodiment of this application. The apparatus 70 is applied to a vehicle key module in a terminal device, the vehicle key module is configured to trigger a vehicle lock module in a vehicle to control a vehicle lock, and the vehicle lock module is configured to control the vehicle lock to be unlocked or locked. As shown in FIG. 9, the apparatus 70 includes:
a receiving module 71, configured to receive a first message sent by the vehicle lock module in the vehicle;
an obtaining module 72, configured to: when it is determined that a vehicle key channel connection is successfully established, obtain head unit connection information from the first message received by the receiving module 71, where the head unit connection information includes authentication information, and the vehicle key channel connection is used for communication between the vehicle key module and the vehicle lock module; and
a sending module 73, configured to send the head unit connection information obtained by the obtaining module 72 to a terminal connection module in the terminal device, so that the terminal connection module establishes, based on the head unit connection information, a head unit channel connection through which the terminal connection module communicates with a head unit connection module in the vehicle, where the terminal connection module is configured to transmit data to the head unit connection module, and the head unit connection module is configured to transmit data to a head unit in the vehicle.

FIG. 10 is a block diagram of a structure of a head unit connection apparatus according to an embodiment of this application. The apparatus 80 is applied to a terminal connection module in a terminal device, the terminal connection module is configured to transmit data to a head unit connection module in a vehicle, the head unit connection module is configured to transmit data to a head unit in the vehicle, the head unit connection information is from a vehicle key module in the terminal device, the vehicle key module is configured to trigger a vehicle lock module in the vehicle to control a vehicle lock, and the vehicle lock module is configured to control the vehicle lock to be unlocked or locked. As shown in FIG. 10, the apparatus 80 includes:
a storage module 81, configured to store the head unit connection information from the vehicle key module in the terminal device, where the head unit connection information includes authentication information;
a first receiving module 82, configured to receive a head unit connection request initiated by the head unit connection module in the vehicle, or initiate a head unit connection request when a start signal of the head unit is detected;
a searching module 83, configured to search the head unit connection information stored by the storage module 81 for head unit connection information matching the head unit connection request received by the first receiving module 82;
an obtaining module 84, configured to obtain authentication information from the head unit connection information found by the searching module 83; and
a returning module 85, configured to return, to the head unit connection module, the authentication information obtained by the obtaining module 84, to establish a head unit channel connection through which the terminal connection module communicates with the head unit connection module.

In a possible implementation, the apparatus further includes:
a second receiving module, configured to receive the head unit connection information sent by the vehicle key module.

The storage module is further configured to store the received head unit connection information in a secure element SE, or store the received head unit connection information in a trusted execution environment TEE, or store the received head unit connection information after software-based encryption.

An embodiment of this application provides an electronic device. The electronic device includes a processor and a memory that is configured to store executable instructions that can be executed by the processor, where the processor is configured to implement the foregoing methods when executing the instructions.

An embodiment of this application provides a nonvolatile computer-readable storage medium, where the nonvolatile computer-readable storage medium stores computer program instructions. When the computer program instructions are executed by a processor, the foregoing methods are implemented.

An embodiment of this application provides a computer program product, including computer-readable code or a nonvolatile computer-readable storage medium carrying computer-readable code. When the computer-readable code is run in a processor of an electronic device, the processor in the electronic device performs the foregoing methods.

A computer-readable storage medium may be a tangible device that may retain and store instructions for use by an instruction execution device. The computer-readable storage medium may be, for example, (but is not limited to) an electrical storage device, a magnetic storage device, an optical storage device, an electromagnetic storage device, a semiconductor storage device, or any suitable combination thereof. More specific examples (a non-exhaustive list) of the computer-readable storage medium include: a portable computer disk, a hard disk, a random access memory (Random Access Memory, RAM), a read-only memory (Read Only Memory, ROM), an erasable programmable read-only memory (Electrically Programmable Read-Only Memory, EPROM, or flash memory), a static random access memory (Static Random-Access Memory, SRAM), a portable compact disc read-only memory (Compact Disc Read-Only Memory, CD-ROM), a digital versatile disc (Digital Video Disc, DVD), a memory stick, a floppy disk, a mechanical coding device, for example, a punching card or a groove protrusion structure that stores instructions, and any suitable combination thereof.

The computer-readable program instructions or code described herein may be downloaded from a computer-readable storage medium to each computing/processing device, or downloaded to an external computer or an external storage device over a network, such as the Internet, a local area network, a wide area network, and/or a wireless network. The network may include copper transmission cables, optical fiber transmission, wireless transmission, routers, firewalls, switches, gateway computers, and/or edge servers. A network adapter card or a network interface in each computing/processing device receives computer-readable program instructions from a network, and forwards the computer-readable program instructions for storage in a computer-readable storage medium in each computing/processing device.

The computer program instructions used to perform operations in this application may be assembly instructions, instruction set architecture (Instruction Set Architecture, ISA) instructions, machine instructions, machine-related instructions, microcode, firmware instructions, status setting data, or source code or target code written in one or any combination of more programming languages. The programming languages include object-oriented programming languages such as Smalltalk and C++, and a conventional procedural programming language such as "C" or a similar programming language. All computer-readable program instructions may be executed on a user computer, or some may be executed on a user computer as a standalone software package, or some may be executed on a local computer of a user while some is executed on a remote computer, or all the instructions may be executed on a remote computer or a server. When the remote computer is involved, the remote computer may be connected to a user computer over any type of network, including a local area network (Local Area Network, LAN) or a wide area network (Wide Area Network, WAN), or may be connected to an external computer (for example, connected by using an Internet service provider over the Internet). In some embodiments, an electronic circuit, for example, a programmable logic circuit, a field programmable gate array (Field Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or the block diagrams of the method, the apparatus (system), and the computer program product according to embodiments of this application. It should be understood that each block in the flowcharts and/or the block diagrams and combinations of blocks in the flowcharts and/or the block diagrams may be implemented by computer-readable program instructions.

These computer-readable program instructions may be provided to a processor of a general-purpose computer, a special-purpose computer, or another programmable data processing apparatus to produce a machine, so that the instructions, when executed by the processor of the computer or the another programmable data processing apparatus, create an apparatus for implementing functions/actions specified in one or more blocks in the flowcharts and/or the block diagrams. Alternatively, these computer-readable program instructions may be stored in a computer-readable storage medium. These instructions enable a computer, a programmable data processing apparatus, and/or another device to work in a specific manner. Therefore, the computer-readable medium storing the instructions includes an artifact that includes instructions for implementing various aspects of functions/actions specified in one or more blocks in the flowcharts and/or the block diagrams.

Alternatively, these computer-readable program instructions may be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implements functions/actions specified in one or more blocks in the flowcharts and/or the block diagrams.

The flowcharts and the block diagrams in the accompanying drawings illustrate system architectures, functions, and operations of possible implementations of apparatuses, systems, methods, and computer program products according to a plurality of embodiments of this application. In this regard, each block in the flowcharts or the block diagrams may represent a module, a program segment, or a part of the instructions, where the module, the program segment, or the part of the instructions includes one or more executable instructions for implementing a specified logical function. In some alternative implementations, the functions marked in the blocks may also occur in a sequence different from that marked in the accompanying drawings. For example, two consecutive blocks may actually be executed substantially in parallel, and sometimes may be executed in a reverse order, depending on a function involved.

It should also be noted that each block in the block diagrams and/or the flowcharts and a combination of blocks in the block diagrams and/or the flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

Embodiments of this application are described above. The foregoing descriptions are examples, are not exhaustive, and are not limited to the disclosed embodiments. Many modifications and changes are clear to a person of ordinary skill in the art without departing from the scope and spirit of the described embodiments. The selection of terms used in this specification is intended to best explain the principles of embodiments, practical application, or improvements to technologies in the market, or to enable another person of ordinary skill in the art to understand embodiments disclosed in this specification.

## Claims

1. A head unit connection method, wherein the method is applied to a vehicle lock module in a vehicle, the vehicle lock module is configured to control a vehicle lock to be unlocked or locked, the vehicle lock module stores head unit connection information, the head unit connection information comprises authentication information, and the method comprises:
verifying an identity of a vehicle key module in a terminal device, wherein the vehicle key module is configured to trigger the vehicle lock module to control the vehicle lock;
when verification on the identity of the vehicle key module succeeds, generating a first message comprising the head unit connection information; and
sending the first message to the vehicle key module, so that a terminal connection module in the terminal device establishes, based on the head unit connection information, a head unit channel connection through which the terminal connection module communicates with a head unit connection module in the vehicle, wherein the terminal connection module is configured to transmit data to the head unit connection module, and the head unit connection module is configured to transmit data to a head unit in the vehicle.

2. The method according to claim 1, wherein the method further comprises:
when a connection signal sent by the vehicle key module is detected, verifying the identity of the vehicle key module by using challenge data; and
when verification on the identity of the vehicle key module succeeds, establishing a vehicle key channel connection through which the vehicle lock module communicates with the vehicle key module; and
the sending the first message to the vehicle key module comprises:
sending the first message to the vehicle key module through the vehicle key channel connection.

3. The method according to claim 1, wherein the method further comprises:
receiving head unit connection information sent by the head unit connection module, wherein the head unit connection information is generated when the head unit connection module successfully establishes the head unit channel connection; and
updating the stored head unit connection information by using the received head unit connection information.

4. The method according to claim 2 or 3, wherein the method further comprises:
storing the head unit connection information in a secure element SE, or storing the head unit connection information in a trusted execution environment TEE, or storing the head unit connection information after software-based encryption.

5. A head unit connection method, wherein the method is applied to a vehicle key module in a terminal device, the vehicle key module is configured to trigger a vehicle lock module in a vehicle to control a vehicle lock, the vehicle lock module is configured to control the vehicle lock to be unlocked or locked, and the method comprises:
receiving a first message sent by the vehicle lock module in the vehicle;
when it is determined that a vehicle key channel connection is successfully established, obtaining head unit connection information from the first message, wherein the head unit connection information comprises authentication information, and the vehicle key channel connection is used for communication between the vehicle key module and the vehicle lock module; and
sending the head unit connection information to a terminal connection module in the terminal device, so that the terminal connection module establishes, based on the head unit connection information, a head unit channel connection through which the terminal connection module communicates with a head unit connection module in the vehicle, wherein the terminal connection module is configured to transmit data to the head unit connection module, and the head unit connection module is configured to transmit data to a head unit in the vehicle.

6. A head unit connection method, wherein the method is applied to a terminal connection module in a terminal device, the terminal connection module is configured to transmit data to a head unit connection module in a vehicle, the head unit connection module is configured to transmit data to a head unit in the vehicle, the terminal connection module stores head unit connection information, the head unit connection information comprises authentication information, the head unit connection information is from a vehicle key module in the terminal device, the vehicle key module is configured to trigger a vehicle lock module in the vehicle to control a vehicle lock, the vehicle lock module is configured to control the vehicle lock to be unlocked or locked, and the method comprises:
receiving a head unit connection request initiated by the head unit connection module in the vehicle, or initiating a head unit connection request when a start signal of the head unit is detected;
searching the stored head unit connection information for head unit connection information matching the head unit connection request;
obtaining authentication information from the found head unit connection information; and
returning the authentication information to the head unit connection module, to establish a head unit channel connection through which the terminal connection module communicates with the head unit connection module.

7. The method according to claim 6, wherein the method further comprises:
receiving the head unit connection information sent by the vehicle key module; and
storing the received head unit connection information in a secure element SE, or storing the received head unit connection information in a trusted execution environment TEE, or storing the received head unit connection information after software-based encryption.

8. Ahead unit connection apparatus, wherein the apparatus is applied to a vehicle lock module in a vehicle, the vehicle lock module is configured to control a vehicle lock to be unlocked or locked, and the apparatus comprises:
a storage module, configured to store head unit connection information;
a verification module, configured to verify an identity of a vehicle key module in a terminal device, wherein the vehicle key module is configured to trigger the vehicle lock module to control the vehicle lock;
a generation module, configured to: when verification performed by the verification module on the identity of the vehicle key module succeeds, generate a first message comprising the head unit connection information stored by the storage module; and
a sending module, configured to send, to the vehicle key module, the first message generated by the generation module, so that a terminal connection module in the terminal device establishes, based on the head unit connection information, a head unit channel connection through which the terminal connection module communicates with a head unit connection module in the vehicle, wherein the terminal connection module is configured to transmit data to the head unit connection module, and the head unit connection module is configured to transmit data to a head unit in the vehicle.

9. The apparatus according to claim 8, wherein the apparatus further comprises:
a verification module, configured to: when a connection signal sent by the vehicle key module is detected, verify the identity of the vehicle key module by using challenge data; and
an establishment module, configured to: when verification on the identity of the vehicle key module succeeds, establish a vehicle key channel connection through which the vehicle lock module communicates with the vehicle key module; and
the sending module is further configured to send the first message to the vehicle key module through the vehicle key channel connection.

10. The apparatus according to claim 8, wherein the apparatus further comprises:
a receiving module, configured to receive head unit connection information sent by the head unit connection module, wherein the head unit connection information is generated when the head unit connection module successfully establishes the head unit channel connection; and
an update module, configured to update the stored head unit connection information by using the received head unit connection information.

11. The apparatus according to claim 9 or 10, wherein the storage module is further configured to: store the head unit connection information in a secure element SE, or store the head unit connection information in a trusted execution environment TEE, or store the head unit connection information after software-based encryption.

12. A head unit connection apparatus, wherein the apparatus is applied to a vehicle key module in a terminal device, the vehicle key module is configured to trigger a vehicle lock module in a vehicle to control a vehicle lock, the vehicle lock module is configured to control the vehicle lock to be unlocked or locked, and the apparatus comprises:
a receiving module, configured to receive a first message sent by the vehicle lock module in the vehicle;
an obtaining module, configured to: when it is determined that a vehicle key channel connection is successfully established, obtain head unit connection information from the first message received by the receiving module, wherein the head unit connection information comprises authentication information, and the vehicle key channel connection is used for communication between the vehicle key module and the vehicle lock module; and
a sending module, configured to send the head unit connection information obtained by the obtaining module to a terminal connection module in the terminal device, so that the terminal connection module establishes, based on the head unit connection information, a head unit channel connection through which the terminal connection module communicates with a head unit connection module in the vehicle, wherein the terminal connection module is configured to transmit data to the head unit connection module, and the head unit connection module is configured to transmit data to a head unit in the vehicle.

13. A head unit connection apparatus, wherein the apparatus is applied to a terminal connection module in a terminal device, the terminal connection module is configured to transmit data to a head unit connection module in a vehicle, the head unit connection module is configured to transmit data to a head unit in the vehicle, head unit connection information is from a vehicle key module in the terminal device, the vehicle key module is configured to trigger a vehicle lock module in the vehicle to control a vehicle lock, the vehicle lock module is configured to control the vehicle lock to be unlocked or locked, and the apparatus comprises:
a storage module, configured to store the head unit connection information from the vehicle key module in the terminal device, wherein the head unit connection information comprises authentication information;
a first receiving module, configured to receive a head unit connection request initiated by the head unit connection module in the vehicle, or initiate a head unit connection request when a start signal of the head unit is detected;
a searching module, configured to search the head unit connection information stored by the storage module for head unit connection information matching the head unit connection request received by the first receiving module;
an obtaining module, configured to obtain authentication information from the head unit connection information found by the searching module; and
a returning module, configured to return, to the head unit connection module, the authentication information obtained by the obtaining module, to establish a head unit channel connection through which the terminal connection module communicates with the head unit connection module.

14. The apparatus according to claim 13, wherein the apparatus further comprises:
a second receiving module, configured to receive the head unit connection information sent by the vehicle key module; and
the storage module is further configured to store the received head unit connection information in a secure element SE, or store the received head unit connection information in a trusted execution environment TEE, or store the received head unit connection information after software-based encryption.

15. An electronic device, comprising:
a processor; and
a memory configured to store instructions that can be executed by the processor, wherein
the processor is configured to: when executing the instructions, implement the method according to any one of claims 1 to 4, or implement the method according to claim 5, or implement the method according to either of claims 6 and 7.

16. A nonvolatile computer-readable storage medium, storing computer program instructions, wherein when the computer program instructions are executed by a processor, the method according to any one of claims 1 to 4 is implemented, or the method according to claim 5 is implemented, or the method according to either of claims 6 and 7 is implemented.
